Europäisches Patentamt

European Patent Office

Office européen des brevets

(19)

(11) Numéro de publication: **0 210 690 B1**

## (12) FASCICULE DE BREVET EUROPEEN

(45) Date de publication de fascicule du brevet: **23.06.93**

(51) Int. Cl.5: **G02B 6/14**, G02F 1/29, G02B 6/12, G02F 1/015

(21) Numéro de dépôt: **86201196.2**

(22) Date de dépôt: **08.07.86**

Le dossier contient des informations techniques présentées postérieurement au dépôt de la demande et ne figurant pas dans le présent fascicule.

(54) **Structure séparatrice, élément de commutation optique incluant de telles structures et matrice de commutation optique formée de ces éléments de commutation.**

(30) Priorité: **11.07.85 FR 8510640**

(43) Date de publication de la demande:
**04.02.87 Bulletin 87/06**

(45) Mention de la délivrance du brevet:
**23.06.93 Bulletin 93/25**

(84) Etats contractants désignés:
**DE FR GB IT NL SE**

(56) Documents cités:
**EP-A- 0 000 647**
**US-A- 3 920 314**

**IEEE TRANSACTIONS ON MICROWAVE THEORY AND TECHNIOUES, vol. MTT-26, no. 10, Octobre 1978, pages 738-746; T.E. ROZZI: "Rigorous Analysis of the Step Discontinuity in a Planar Dielectric Waveguide"**

**ELECTRONICS LETTERS, vol. 12, no. 18, 2 Septembre 1976, pages 473-475: "Step Discontinuities on Dielectric Waveguides"**

(73) Titulaire: **ALCATEL ALSTHOM RECHERCHE Société Anonyme**
**Route de Nozay**
**91460 Marcoussis(FR)**

(72) Inventeur: **Erman, Marko Société Civile S.P.I.D.**
**209 rue de l'Université**
**F-75007 Paris(FR)**
Inventeur: **Vodjdani, Nakita Société Civile S.P.I.D.**
**209 rue de l'Université**
**F-75007 Paris(FR)**
Inventeur: **Theeten, Jean-Bernard Société Civile S.P.I.D.**
**209 rue de l'Université**
**F-75007 Paris(FR)**

(74) Mandataire: **Dalsace, Michel et al**
**c/o Sospi 14-16, rue de la Baume**
**F-75008 Paris (FR)**

Rank Xerox (UK) Business Services
(3. 10 / 3.6 / 3.3. 1)

IEE SECOND EUROPEAN CONFERENCE ON INTEGRATED OPTICS, Florence, 17-18 Octobre 1983; Conference publication no. 227, pages 136-139

Th.TAMIR (Ed.): "Guided-Wave Optoelectronics", 2ième édition, Springer-Verlag, 1990; pages 90-92

# EP 0 210 690 B1

## Description

L'invention concerne un élément de commutation entre des guides de lumière monolithiquement intégrés sous forme de rubans semiconducteurs en un matériau d'un premier indice de réfraction réalisés sur un substrat semiconducteur en un matériau d'un second indice de réfraction tel que la lumière reste confinée dans les rubans formant les guides, cet élément de commutation comportant une région d'entrée incluant au moins un guide de lumière monomode, une région intermédiaire incluant un guide de lumière bimode et une région de sortie incluant aux moins un guide de lumière pouvant transporter une onde issue de la région intermédiaire.

L'invention concerne également une matrice de commutation optique formée de ces éléments.

L'invention trouve son application dans la commutation de signaux optiques transportés par fibres optiques par exemple dans le domaine des télécommunications, domaine dans lequel la commutation entre (de nombreuses fibres optiques doit être rendue possible pour éviter de devoir convertir les signaux optiques transportés par fibres en signaux électriques lors de la commutation entre les différents abonnés.

Une matrice de commutation optique formée d'éléments de commutation similaires à celui défini ci-dessus est connue par la publication de A.Neyer et W.Mevenkamp, intitulée "Single-mode electrooptic X-switch for integrated optic switching networks" dans IEEE, Second European Conference on Integrated Optics (Fiorenza, 17-18 October 1983, Conference Publication N°227, pp. 136-139).

Ce document décrit une matrice de commutation de nxn guides de lumière, monolithiquement intégrée sur un substrat en LiNbO$_3$. Des guides de lumière monomodes sont formés dans le substrat par diffusion de Ti. Ces guides présentent une largeur w et se croisent deux à deux sous un angle $\alpha$.

La zone d'intersection de deux guides constitue l'élément de commutation. La variation de l'indice de réfraction par rapport au substrat y est deux fois celle d'un guide seul. D'autre part cette zone présente une dimension d parallèle au substrat plus grande que la dimension w d'un guide seul. De ce fait, la zone d'intersection de deux guides est bi-mode dans un plan parallèle au substrat. Elle transporte à la fois le mode fondamental et le mode transversal de premier ordre.

Ce dispositif permet de réaliser la commutation entre les deux guides de sortie. La puissance transportée par chacun des guides de sortie est déterminée par la différence de phase relative entre les deux modes, fondamental et de premier ordre, à l'extrémité de la zone d'intersection. Cette différence de phase dépend de la largeur w, de la variation de l'indice de réfraction et de l'angle $\alpha$ à l'intersection.

Cette différence de phase peut être contrôlée électriquement par une variation électro-optique de l'indice de réfraction, en polarisant deux électrodes placées de part et d'autre de la zone d'intersection de chaque ensemble de deux guides.

Mais ce dispositif connu présente plusieurs inconvénients. Tout d'abord, les angles d'intersection $\alpha$ des deux guides sont faibles, de 0,6° à 1,4°. Il sont donc difficilement réalisables sur un matériau semiconducteur. En effet, tous les procédés de réalisation que l'on peut mettre en oeuvre pour réaliser les guides d'onde, et en particulier la gravure, ou la croissance épitaxiale, sont anisotropes. Si bien que toutes les opérations qui ne sont pas conduites parallèlement à des axes ou des faces cristallographiques entraînent des rugosités ou des marches sur les parois de guides, et par conséquent des pertes. Or des angles de l'ordre de 1° ne peuvent conduire à des directions cristallographiques dans les matériaux semiconducteurs. Le dispositif connu est donc d'une réalisation difficile et sujet à des pertes élevées. D'autre part de tels angles conduisent obligatoirement à une surface élevée pour la matrice. En effet, pour une matrice de 10x10 éléments de commutation, la surface occupée est de l'ordre de 20x20 mm. En termes de circuits intégrés, cette surface est réellement énorme.

La publication IEEE Transactions on Microwave Theory and Techniques, vol. MTT-26, n° 10, oct. 1978, p. 738-746, décrit un guide de lumière présentant une discontinuité abrupte de sa dimension perpendiculairement à ses faces principales, y délimitant une région bimode dans la zone la plus épaisse et une région monomode dans la zone plus mince.

La publication Electronics Letters, vol. 12, n° 18, sept. 1976, p. 473-475, décrit un guide d'onde présentant une diminution brusque d'épaisseur dans le sens de propagation de la lumière.

La présente invention permet de pallier les inconvénients mentionnés ci-dessus. Ce but est atteint à l'aide d'un élément de commutation tel que défini dans la revendication 1.

Selon une forme de réalisation de l'invention, cet élément de commutation est caractérisé en ce que la seconde structure séparatrice est orientée selon une direction différente de celle normale à l'axe optique de sorte que dans le second état de polarisation le faisceau est défléchi par la partie de paroi de cette seconde structure selon un angle double de l'angle d'incidence du faisceau sur cette paroi. La seconde portion de guide de la région de sortie est de préférence placée dans l'axe du faisceau réfléchi.

3

Cet élément de commutation présente une zone intermédiaire dont la dimension longitudinale, selon l'axe optique, est très réduite. De plus cette dimension n'est pas critique, car si un manque de précision vient à apparaître sur sa valeur, lors de l'élaboration du dispositif, le déphasage nécessaire au fonctionnement souhaité peut être imposé par une simple variation des états de polarisation. L'élément de commutation selon l'invention est donc de dimension faible et de réalisation aisée.

Dans une forme de réalisation cet élément est caractérisé en ce que le substrat est en arséniure de gallium de type $n^+$, et en ce que les guides de lumière sont en arséniure de gallium de type $n^-$. De préférence la première structure séparatrice placée entre la région d'entrée et la région intermédiaire est formée par une facette cristallographique perpendiculaire à l'axe optique de la portion de guide d'entrée, et la seconde structure séparatrice placée entre la région intermédiaire et la région de sortie inclut une facette cristallographique réalisée à 45° de l'axe optique de la portion de guide de la région intermédiaire, en sorte que la seconde portion de guide de la région de sortie recevant le faisceau réfléchi est réalisée perpendiculairement à cet axe.

Dans ces conditions cet élément de commutation est particulièrement bien adapté aux applications aux télécommunications pour lesquelles la longueur d'onde utilisée est 1,3μm ou 1,55μm.

Dans une variante, la lumière est particulièrement bien confinée dans les guides par des facettes cristallographiques et les pertes sont réduites. De plus le coefficient de réflexion affecté au premier faisceau d'un premier mode de propagation réfléchi par une structure séparatrice constituée d'une facette cristallographique est maximal si le milieu externe à cette facette est l'air ou un autre milieu de faible indice de réfraction. Les pertes, lors de la séparation des faisceaux sont donc aussi réduites.

Ainsi une matrice de commutation optique entre un nombre nxn guides de lumière, caractérisée en ce qu'elle est formée de nxn éléments de commutation selon l'invention peut aussi être réalisée.

Cette matrice offre l'avantage d'être d'une faible surface et d'une réalisation aisée. De plus elle assure une commutation du type large bande qui ne pourrait être obtenue à l'aide d'une commutation purement électrique.

Enfin un avantage important réside dans le fait que toute erreur sur les distances entre les éléments de commutation dans la matrice peut être rattrapée en prévoyant l'application de polarisation sur chacune des branches, permettant de rattraper de façon simple et sans augmentation de la surface, toute erreur de déphasage.

L'invention sera mieux comprise à l'aide de la description suivante illustrée par les figures annexées dont :
- les figures 1a à 1c représentent en coupe longitudinale et transversale une structure séparatrice entre une région monomode et une region bimode d'un guide de lumière;
- les figures 2a à 2c représentent en coupe longitudinale et transversale une structure séparatrice entre une region bimode et une region monomode d'un guide de lumière;
- les figures 3a à 3d montrent la propagation de l'amplitude des ondes dans la région bimode d'un élément de commutation ;
- les figures 4a et 4b montrent le propagation de l'intensité des ondes dans la région bimode d'un élément de commutation ;
- les figures 5a et 5b montrent la propagation de l'intensité pour une position de la structure séparatrice conforme à la figure 2 ;
- les figures 6a et 6b montrent la propagetion de l'intensité pour une autre position de la structure séparatrice conforme à le figure 2 ;
- les figures 7a et 7b montrent la propagation de l'intensité pour une position de la structure séperatrice conforme à la figure 2 associée à une polarisation de la région bimode.
- les figures 8a et 8b montrent la propagation de l'intensité pour une même position de cette structure séparatrice associée à une autre polarisation de la région bimode ;
- la figure 9 montre, vue du dessus, cette même structure séparatrice ;
- les figures 10a à 10c montrent respectivement en coupe longitudinale, vu du dessus et en coupe transversale un élément de commutation selon l'invention ;
- les figures 11a à 11c montrent respectivement en coupe longitudinale, vue du dessus et en coupe trensversale une région de la matrice de commutation selon l'invention ;
- la figure 12 montre schématiquement vue du dessus une telle matrice de commutation à 4x4 éléments de commutation ;
- les figures 13 montrent les différentes étapes d'un procédé de réalisation d'un élément de commutation, en coupe transversale.

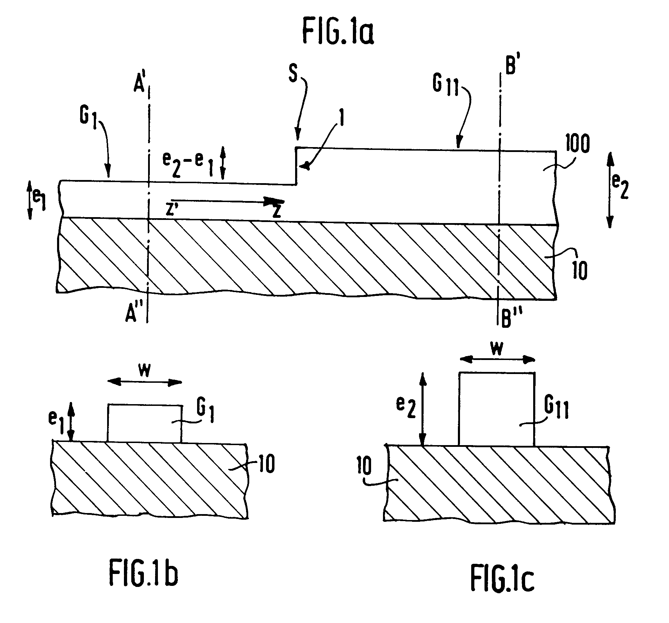

Tel que représenté en coupe longitudinale sur la figure 1a, une discontinuité abrupte dite première structure séparatrice S est appliquée à un guide de lumière 100. Ce guide est formé d'un ruban

semiconducteur réalisé en surface d'un substrat plan 10 en un matériau semiconducteur compatible. L'indice de réfraction $n_g$ du guide de lumière est légèrement supérieur à l'indice du substrat $n_S$, en sorte que la lumière qui se propage selon le direction de l'axe optique z'z, est confinée dans le guide. Le guide de lumière 100 peut présenter une section droite rectangulaire comme il est montré figures 1b et 1c. Le guide 100 présente une région d'entrée de la lumière, $G_1$, dont la dimension parellèlement au substrat est $\overline{w}$ et la dimension perpendiculairement au substrat est $e_1$. La région $G_1$ est prévue pour transporter une onde monomode de longueur d'onde $\lambda$ . Pour le mode fondamental, la dimension $e_1$ du guide perpendiculairement au substrat est soumise à la condition (1) :

$$\frac{(2m + 1)^2 \lambda^2}{32\ n_g(n_g - n_S)} < e_1^2 < \frac{(2m' + 1)^2\ \lambda^2}{32\ n_g(n_g - n_S)} \tag{1}$$

dans laquelle m et m' sont des constantes de mode telles que

m = 0, correspondant au mode fondamental, et

m' = 1, correspondant eu mode d'ordre 1.

Cette relation est connue de l'ouvrage publié par R.G. Hunsperger Springer Series in Optical Sciences, intitulé "Integreted Optics : Theory end Technology", Springer-Verlag, Berlin, Heidelberg, New-York (pp.35-37, § 3.1.2, 3.1.3).

La structure séparatrice S, en référence avec les figures 1, sépare la région $G_1$ monomode d'une seconde région $G_{11}$ destinée à transporter une onde bimode perpendiculairememt eu substrat. La dimension $e_2$ du guide $G_{11}$ perpendiculairement au substrat doit alors répondre à la condition (2) :

$$\frac{(2m' + 1)^2 \lambda^2}{32\ n_g(n_g - n_S)} < e_2^2 < \frac{(2m'' + 1)^2 \lambda^2}{32\ n_g(n_g - n_S)} \tag{2}$$

dans laquelle

m' = 1 correspondant au mode d'ordre 1,

et

m" = 2 correspondant au mode d'ordre 2.

Les conditions 1 et 2 expriment le fait que, dans chaque région du guide, les dimensions perpendiculaires au substrat doivent être suffisantes pour assurer la propagation du mode choisi mais cependant limitées pour éviter la propagation du mode d'ordre supérieur. Les figures 1b et 1c représentent respectivement des coupes transversales du guide 100, dans les régions $G_1$ et $G_{11}$, selon les plans A'A" et B'B".

On remarquera que dans la région bimode $G_{11}$, se propagent à la fois l'onde de mode fondamental et l'onde d'ordre premier. De plus la dimension $\overline{w}$ de la région $G_1$ est la même que la dimension $\overline{w}$ de la région $G_{11}$ parallèlement au substrat. Cette dimension $\overline{w}$ est choisie de manière telle que les régions $G_1$ et $G_{11}$ sont toutes deux monomodes parallèlement au substrat.

La structure séparatrice S permettant de passer de la région monomode $G_1$ du guide de lumière à la région bimode $G_{11}$, est une variation abrupte de la dimension du guide perpendiculairement au substrat. Telle qu'illustrée par les figures 1, cette variation abrupte est une augmentation de la dimension du guide perpendiculairement au substrat, en sorte que cette dimension passe de la valeur $e_1$ à la valeur $e_2$ telles que

$$e_1 < e_2$$

le long d'une paroi plane 1 perpendiculaire au substrat et à l'axe optique z'z du guide de lumière.

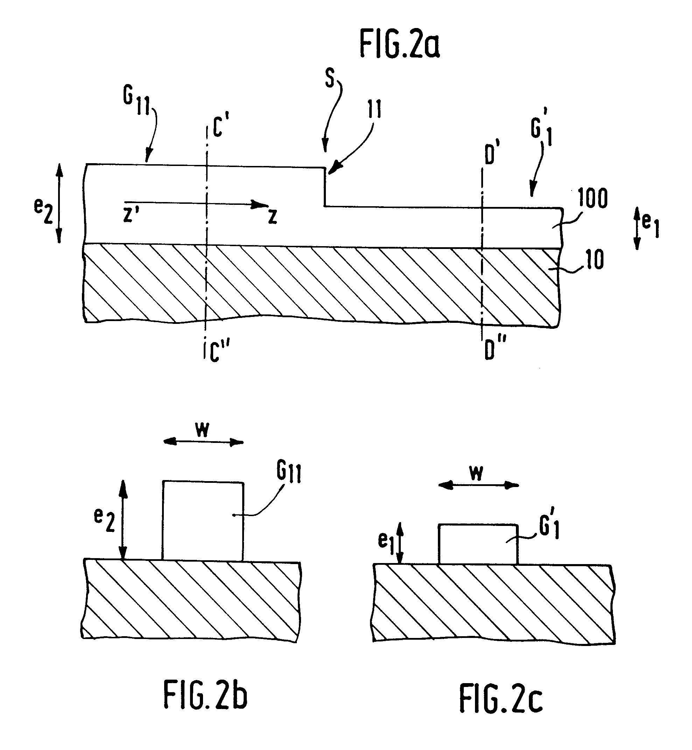

D'autre part, telle que représentée sur la figure 2a, une autre discontinuité brusque dite seconde structure séparatrice S est appliquée à la région $G_{11}$ bimode perpendiculairement au substrat 10 du guide de lumière 100 qui transporte le faisceau lumineux de longueur d'onde $\lambda$ dans la direction z'z de l'axe optique du guide.

La structure séparatrice S permet de passer de la région bimode $G_{11}$ à la région monomode $G'_1$ par une variation abrupte de la dimension du guide perpendiculairement au substrat. Cette variation abrupte est une diminution de la dimension du guide perpendiculairement au substrat, en sorte que cette dimension passe de la valeur $e_2$ à la valeur $e_1$ telles que $e_1 < e_2$ le long d'une paroi plane 11.

La dimension de cette région $G_{11}$ du guide est soumise, comme il a été dit précédemment, à la relation (2). La dimension $e_1$ de la région $G'_1$ doit alors obéir à la relation (1) précédemment citée. Les figures 2b et 2c représentent respectivement des coupes transversales du guide 100, dans les régions $G_{11}$ et $G'_1$, selon les plans C'C" et D'D".

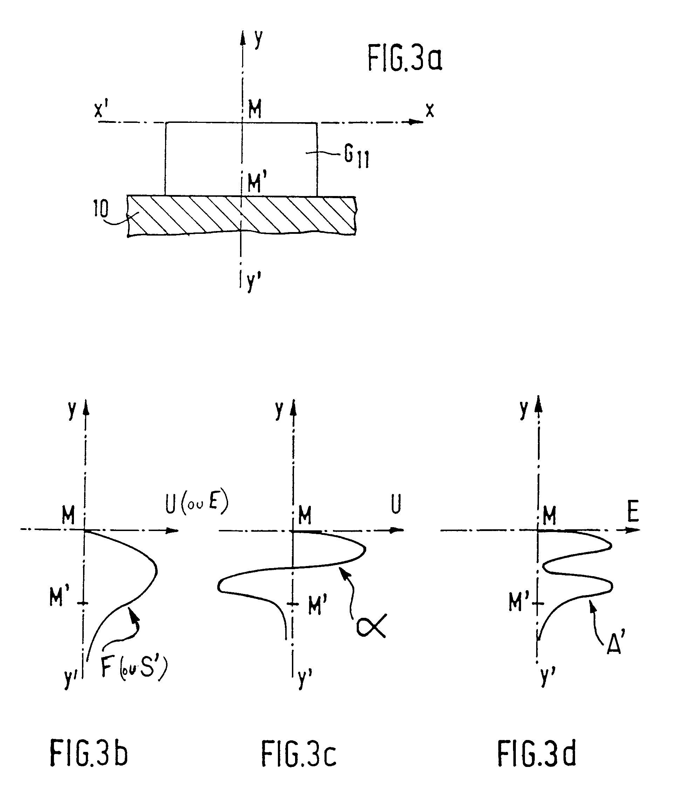

La région $G_{11}$ bimode perpendiculairement au substrat transporte d'une part le mode fondamental, dont l'amplitude $U$ dans le plan (x'x, y'y) de la section droite du guide dans cette région (la figure 3a montrant la position relative des axes x'x et y'y dans cette section) est représentée par la courbe F sur la figure 3b. Ce mode fondamental se trouve être un mode symétrique. La région $G_{11}$ transporte d'autre part le mode d'ordre premier, qui se trouve être un mode asymétrique. L'amplitude $U$ de ce mode d'ordre premier asymétrique est représentée par la courbe $\alpha$ sur la figure 3c. La courbe A' sur la figure 3d représente la répartition d'energie E du mode d'ordre premier assymetrique (qui est le carré de l'amplitude $\alpha$). La répartition d'energie E du mode fondamental (qui est le carré de l'amplitude F) pourrait egalement être representée par une courbe S' similaire à la présente courbe F.

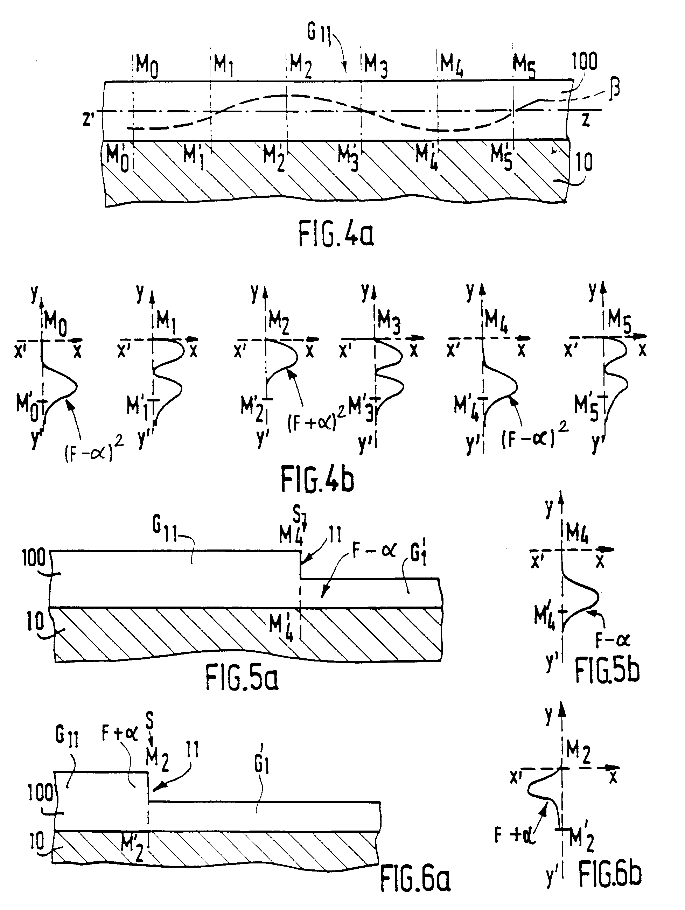

Dans la région bimode $G_{11}$ apparaît alors un phénomène de battements entre le mode fondamental d'amplitude F et le mode d'ordre premier d'amplitude $\alpha$. Cela resulte en un faisceau dont le barycentre des énergies est représenté sur la figure 4a, par la courbe $\beta$ en trait discontinu.

Les figures 4b représentent les courbes représentatives des énergies dans les plans de section droite de la région $G_{11}$, aux positions respectives $M_0 M'_0$, $M_1 M'_1$, $M_2 M'_2$, $M_3 M'_3$, $M_4 M'_4$, $M_5 M'_5$ de la coupe longitudinale de la figure 4a.

On note qu'aux positions $M_0 M'_0$ et $M_4 M'_4$ l'énergie est $(F-\alpha)^2$ alors qu'en $M_2 M'_2$ l'énergie est $(F+\alpha)^2$.

La figure 5a montre en coupe longitudinale que par exemple pour les positions $M_0 M'_0$, ou bien $M_4 M'_4$ de la structure S le long de l'axe z'z, l'onde d'énergie $(F-\alpha)^2$ continue son trajet dans la région $G'_1$ étrécie du guide de lumière, la figure 5b représentant la forme de l'onde dans un plan de section droite du guide dans cette région $G'_1$.

Il est clair qu'il est possible de trouver une autre position, par exemple $M_2 M'_2$ de la structure S le long de l'axe z'z pour que l'onde d'énergie $(F+\alpha)^2$ soit réfléchie par la paroi 11. La figure 6a montre en coupe longitudinale une structure S ainsi placée et la figure 6b représente la forme de l'onde réfléchie dans un plan de section droite du guide dans la région $G_{11}$.

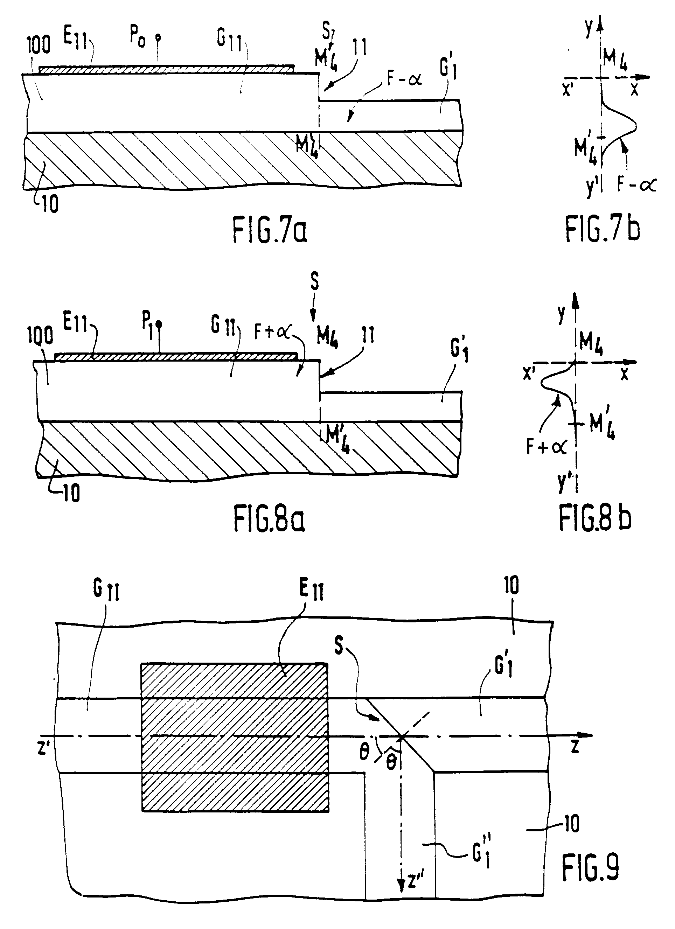

Pour une position de la structure S choisie conforme à celle de la figure 5a, telle que par exemple l'onde $F-\alpha$ est transmise, il pourra être obtenu que l'onde $F+\alpha$ soit réfléchie sur commande pour cette même position de la structure S, en appliquant sur la région $G_{11}$ une polarisation apte à faire varier l'indice $n_g$ du guide d'une valeur $\triangle n_g$, provoquant alors une variation de la différence de phase entre $F-\alpha$ et $F+\alpha$, en sorte que pour cette même position de S, l'onde $F+\alpha$ vient se réfléchir sur la paroi 11. Ce phénomène est mis en évidence sur les figures 7a et 8a. Cette polarisation peut par exemple être produite par le moyen d'une différence de potentiel appliquée entre une électrode $E_{11}$ placée en surface de la région $G_{11}$ et une électrode non représentée dont le contact est pris sur le substrat, comme illustré par les figures 7a, 8a et 9, montrant respectivement le guide en coupe longitudinale dans un premier état de polarisation $P_0$, le guide en coupe longitudinale dans un second état de polarisation $P_1$ et le guide vu du dessus, muni d'une électrode $E_{11}$. Les figures 7b et 8b montrent respectivement la courbe d'énergie transmise dans la région $G'_1$ correspondant à la figure 7a, et la courbe d'énergie réfléchie dans la région $G_{11}$ correspondant à la figure 8a, ces courbes étant représentées dans un plan de coupe transversale de ces régions.

L'alternance d'un état de polarisation noté $P_0$ et d'un autre état de polarisation noté $P_1$ appliqué au moyen d'une différence de potentiel entre une électrode telle que $E_{11}$ sur la région $G_{11}$ et une électrode non représentée dont le contact est pris sur le substrat, permet l'alternance correspondante entre la transmission de l'onde $F-\alpha$ dans la région $G'_1$ et la réflexion de l'onde $F+\alpha$ par la paroi 11 (figures 7 et 8).

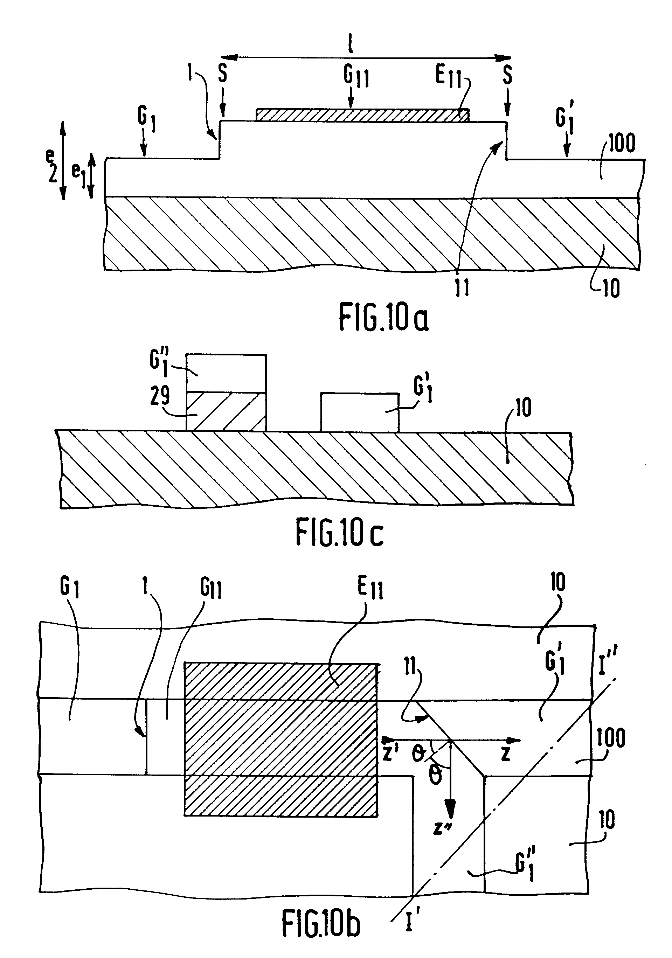

Afin de pouvoir disposer de l'onde réfléchie $F+\alpha$, la paroi 11 peut être placée de telle sorte que le faisceau incident fait avec cette paroi un angle $\theta$. L'onde $F+\alpha$ est alors réfléchie par la paroi 11 sous un angle double $(2\theta)$, et peut être transportée par un guide de lumière $G"_1$ placé sur le trajet du faisceau réfléchi dans cette direction de propagation comme il est montré vu du dessus figure 9.

On notera que dans ces conditions, au-delà de la structure séparatrice S11, les ondes $F-\alpha$ et $F+\alpha$ sont transportées par des faisceaux lumineux dont la distance au substrat est différente.

On notera en outre que la position de la structure S11 le long de l'axe z'z de la région $G_{11}$ n'est pas critique pour obtenir le fonctionnement décrit ci-dessus. Il suffit en effet d'appliquer les polarisations $P_0$ et $P_1$ appropriées pour obtenir respectivement dans un cas la transmission de l'onde $F-\alpha$ et dans l'autre la réflexion de l'onde $F+\alpha$.

Il apparaît maintenant clairement que les éléments décrits plus haut permettent de réaliser un élément de commutation optique.

Tel que représenté sur la figure 10a, en coupe longitudinale, cet élément de commutation est constitué d'un guide de lumière 100, du type déjà décrit formé sur un substrat 10.

Cet élément comprend une région d'entrée $G_1$, monomode, une région intermédiaire $G_{11}$ bimode perpendiculairement au substrat et monomode parallèlement au substrat, et une région de sortie incluant deux guides de lumière $G'_1$ et $G''_1$. Cet élément comprend en outre une première structure séparatrice S, formée par une paroi 1 perpendiculaire à la fois au substrat et à l'axe optique z'z, et une seconde structure séparatrice S formée par la paroi 11, perpendiculaire au substrat mais placée sous un angle $\theta$ sur l'axe optique. Une polarisation est en outre appliquée sur la région intermédiaire $G_{11}$, par exemple au moyen d'une électrode $E_{11}$, associée à une électrode non représentée dont le contact est pris sur le substrat.

Le fonctionnement de cet élément de commutation découle des propriétés de la structure séparatrice formée par la paroi 1 et de la structure séparatrice formée par la paroi 11, déjà décrites.

La région d'entrée $G_1$ du guide 100 est monomode aussi bien parallèlement au substrat que perpendiculairement au substrat. La dimension $e_1$ de cette région perpendiculairement au substrat est donnée par la relation (1) citée précédemment. La dimension $\underline{w}$ de cette région parallèlement au substrat est également prévue pour vérifier cette relation.

La paroi 1 forme une augmentation abrupte de la dimension du guide perpendiculairement au substrat et la dimension du guide dans la région intermédiaire $G_{11}$ est $e_2$ qui vérifie la relation (2). Dans ces conditions la propagation des ondes dans la région intermédiaire $G_{11}$ est bimode et conforme à ce qui a été décrit précédemnent pour une telle région de dimension $\underline{w}$ parallèlement au substrat.

La seconde structure séparatrice formant un étrécissement abrupte de la dimension du guide perpendiculairement au substrat au moyen de la paroi 11, est placée à une distance $\ell$ de la première structure séparatrice formée par la paroi 1. Cette distance $\ell$ est prévue en fonction de la longueur d'onde $\lambda$, de la dimension $e_2$ et des indices $n_g$ du guide et $n_S$ du substrat pour que l'onde F-$\alpha$ soit transmise dans la région de guide étrécie $G'_1$.

Par l'application d'une polarisation sur la région $G_{11}$, par exemple par l'intermédiaire de l'électrode $E_{11}$ associée à l'électrode non représentée dont le contact est pris sur le substrat, une variation de l'indice du guide $G_{11}$ est engendrée, produisant une différence de phase entre les ondes telle que l'onde F+$\alpha$ est réfléchie sur la paroi 11. Cette dernière est placée sous un angle $\theta$ sur l'axe optique z'z de sorte que le faisceau ainsi réfléchi se propage dans le guide $G''_1$ qui fait l'angle $2\theta$ avec z'z.

Les faisceaux qui se propagent dans $G'_1$ d'une part et dans $G''_1$ d'autre part sont monomodes et les dimensions de ces régions de guide vérifient la relation 1. De plus la région de guide $G''_1$ n'est pas située au même niveau par rapport au substrat que la région $G'_1$ comme il est montré figure 10c qui est une coupe transversale selon l'axe I'I" de la figure 10b, cette dernière étant une vue du dessus de l'élément de commutation. Ainsi comme il est montré figure 10c une région semi-conductrice 29 d'indice inférieur à l'indice du guide $G''_1$ peut être réalisée entre ce dernier et le substrat. Cette différence d'indice est prévue pour obtenir le confinement de la lumière dans le guide $G''_1$.

Les guides $G'_1$ et $G''_1$ placés le premier dans le prolongement du faisceau transmis et le second dans le prolongement du faisceau réfléchi par la structure séparatrice formée par la paroi 11, constituent les deux guides de sortie de l'élément de commutation entre lesquels la commutation est déclenchée par la polarisation de la région intermédiaire.

La longueur $\ell$ de la région intermédiaire n'est pas critique. En effet une première polarisation $P_0$ peut être appliquée sur cette région $G_{11}$ pour obtenir exactement la transmission de l'onde F-$\alpha$ dans le guide $G'_1$. Puis une seconde polarisation $P_1$ peut être appliquée sur la région $G_{11}$ pour obtenir exactement la réflexion de l'onde F+$\alpha$ dans le guide $G''_1$.

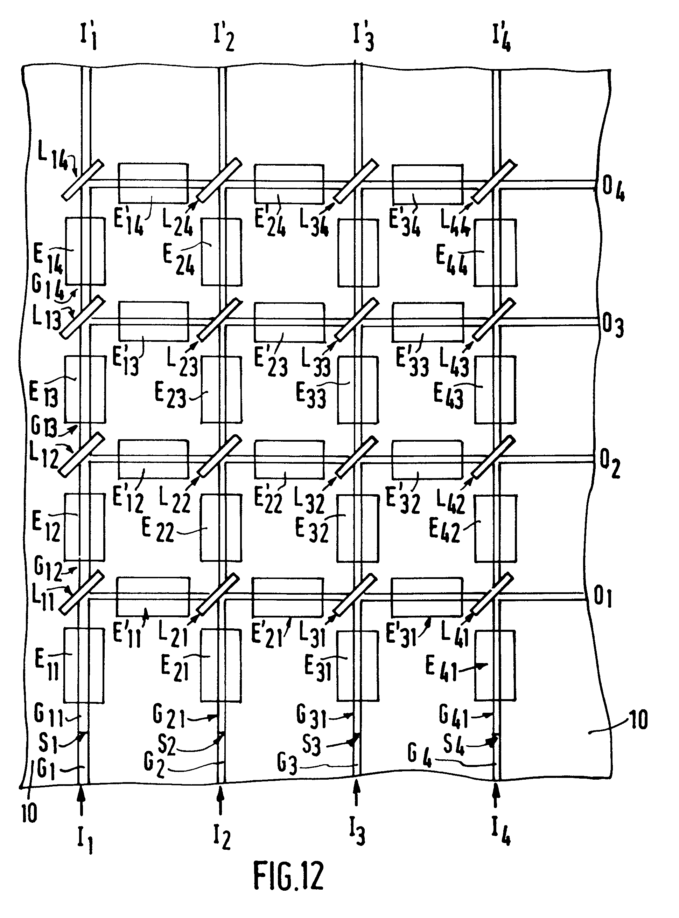

Un exemple de réalisation d'une matrice de commutation optique à quatre entrées $I_1$, $I_2$, $I_3$, $I_4$ et quatre sorties $O_1$, $O_2$, $O_3$, $O_4$ est représenté sur la figure 12.

Des signaux optiques de longueur d'onde $\lambda$ , monomodes perpendiculairement au substrat 10 sont appliqués sur chacune des entrées $I_1$, $I_2$, $I_3$, $I_4$, formées de guides du type $G_1$ décrit précédemment, respectivement $G_1$, $G_2$, $G_3$, $G_4$ de dimension $e_1$ perpendiculairement au substrat. Les signaux deviennent bimodes au-delà des structures séparatrices respectivement $S_1$, $S_2$, $S_3$, $S_4$ formées par des parois du type de la paroi 1 décrite précédemment, et sont transportés par les régions intermédiaires respectivement $G_{11}$, $G_{21}$, $G_{31}$ et $G_{41}$.

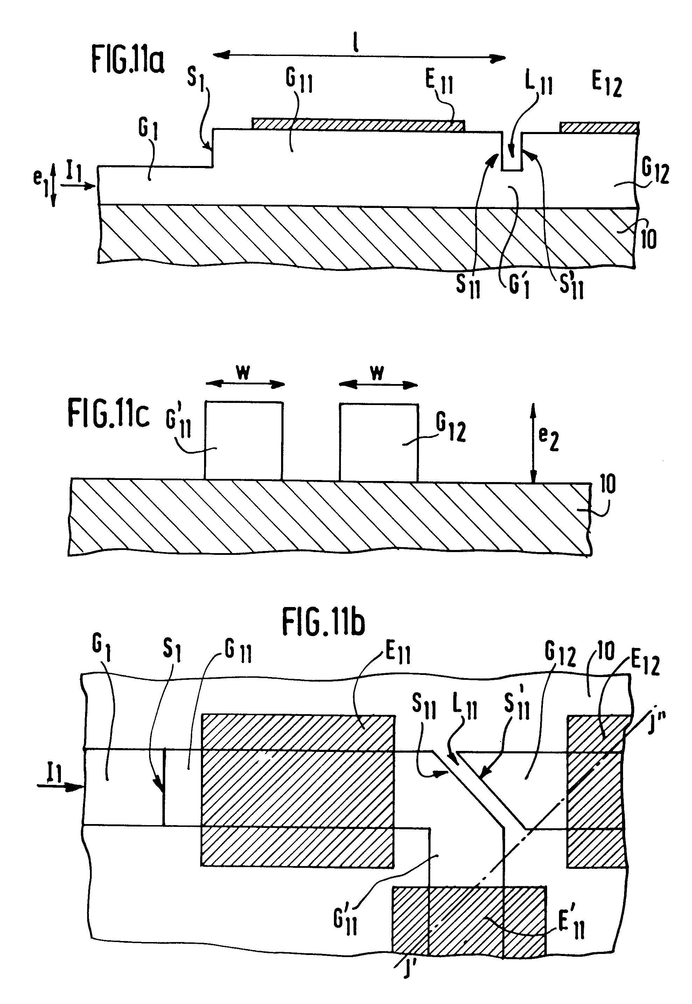

La figure 11a montre en coupe longitudinale une région de la matrice commandée par l'entrée $I_1$, et la figure 11b montre la même région vue du dessus.

Comme il est montré sur cette figure, le faisceau transporté par la région $G_{11}$ rencontre la structure séparatrice $S_{11}$ du type de la paroi 11 décrite et selon la polarisation appliquée sur cette région intermédiaire $G_{11}$, ou bien un faisceau d'un premier mode de propagation est réfléchi dans le guide $G'_{11}$ ou bien un second faisceau d'un second mode de propagation est transmis dans la région étrécie $G'_1$.

Afin de pouvoir à nouveau effectuer d'autres commutations à l'aide des faisceaux issus de cet élément de commutation des régions bimodes sont à nouveau instaurées sur le trajet de ces faisceaux.

A cet effet une nouvelle structure séparatrice $S'_{11}$ du type de la paroi 1 décrite est placée sur le guide $G'_1$ de manière à former une région du type intermédiaire $G_{12}$.

Ainsi le dispositif formé de la paroi $S_{11}$ du type 1 et de la paroi $S'_{11}$ du type 11 constitue une lame à faces parallèles $L_{11}$ de profondeur $e_2$-$e_1$, $e_2$ étant la dimension des régions $G_{11}$ et $G_{12}$ perpendiculairement au substrat et $e_1$ celle de la région $G'_1$. Cette lame $L_{11}$ peut être soit une lame d'air, soit une lame d'un matériau d'indice plus faible que celui des guides afin d'assurer la réflexion totale.

La propagation bimode dans le guide $G'_{11}$ qui transporte le faisceau réfléchi est assurée en prévoyant la dimension de ce guide perpendiculairement au substrat égale à celle de région intermédiaire $G_{11}$, comme il est montré figure 11c qui est une coupe transversale de la région représentée figure 11b, la coupe étant effectuée le long de l'axe J'J".

Afin d'assurer une forme régulière à la matrice de commutation, l'angle selon lequel est incliné la lame $L_{11}$ peut être avantageusement de 45°, de sorte que le guide $G'_{11}$ est perpendiculaire au guide d'entrée.

Un élément unitaire de matrice de commutation sera donc constitué d'une région intermédiaire bimode identique à $G_{11}$ et d'une lame à face parallèle identique à $L_{11}$ pouvant fournir soit un faisceau transmis soit un faisceau réfléchi au moyen de la polarisation appliquée sur cette région intermédiaire.

En répétant cet élément unitaire de matrice 15 fois, on obtient la matrice de commutation représentée figure 12.

On notera que les branches perpendiculaires aux branches d'entrée, du type de la branche de guide $G'_{11}$ sont également munies d'électrodes de polarisation telles que $E'_{11}$, $E'_{21}$ etc.... Ces électrodes sont destinées à permettre un éventuel déphasage de rattrapage pour que le faisceau transporté par ces branches puisse être dirigé vers la sortie correspondant à sa direction, soit $O_1$ ou $O_2$ ou $O_3$ ou $O_4$. Ces électrodes de rattrapage de phase ne sont pas obligatoires si la distante entre deux lames à faces parallèles sur ces branches est réalisée avec suffisamment de précision pour que l'onde F-$\alpha$ puisse être transmise directement. Si le dispositif n'est pas réalisé avec une précision suffisante, alors les électrodes $E'_{11}$, $E'_{21}$, $E'_{31}$ etc... sont utiles pour obtenir ce résultat. On notera également qu'une seule électrode dont le contact est pris sur le substrat suffit pour qu'on lui applique le potentiel de référence permettant une différence de potentiel avec les autres électrodes.

Ainsi chacune des quatre entrées $I_1$, $I_2$, $I_3$, $I_4$ peut être dirigée soit vers $O_1$, soit vers $O_2$, soit vers $O_3$, soit vers $O_4$. Une entrée non dirigée vers une sortie peut être éventuellement transmise vers l'une des sorties de faisceau transmis $I'_1$, $I'_2$, $I'_3$, $I'_4$ afin de n'être pas perdue. Toutes les opérations de commutation sont donc possibles.

## Exemple de réalisation

L'ensemble des dispositifs décrits précédemment est de préférence réalisé à partir de guides de lumière enterrés dans le substrat. En effet, ces dispositifs incluent des portions de guides qui sont bimodes perpendiculairement au substrat et monomodes parallèlement au substrat. Cet effet est plus aisément obtenu si un matériau de même nature que le substrat vient noyer les faces latérales des guides de lumière.

D'autre part comme il a été vu lors de l'étude de l'état de la technique, tous les procédés de réalisation qui s'appliquent aux dispositifs semiconducteurs sont plus ou moins anisotropes. Il est donc avantageux d'utiliser cette propriété pour faire en sorte que les faces des guides de lumière et les parois des structures séparatrices soient des facettes cristallographiques. La lumière sera alors mieux confinée dans les guides, ou mieux réfléchie par les lames à faces parallèles inclues dans la matrice. De façon avantageuse, la matrice de commutation sera réalisée sur un substrat semiconducteur mono-cristallin et les guides de lumière ainsi que les structures séparatrices seront réalisées par gravure anisotrope ou croissance épitaxiale anisotrope selon des axes cristallographiques priviligiés afin de faire apparaître ces facettes.

Enfin il est avantageux de choisir l'arséniure de gallium (GaAs) comme matériau semiconducteur constituant le substrat car ce matériau permet la propagation des ondes aux longueurs d'onde 1,3$\mu$m et 1,55$\mu$m envisagées pour les applications dans le domaine des télécommunications.

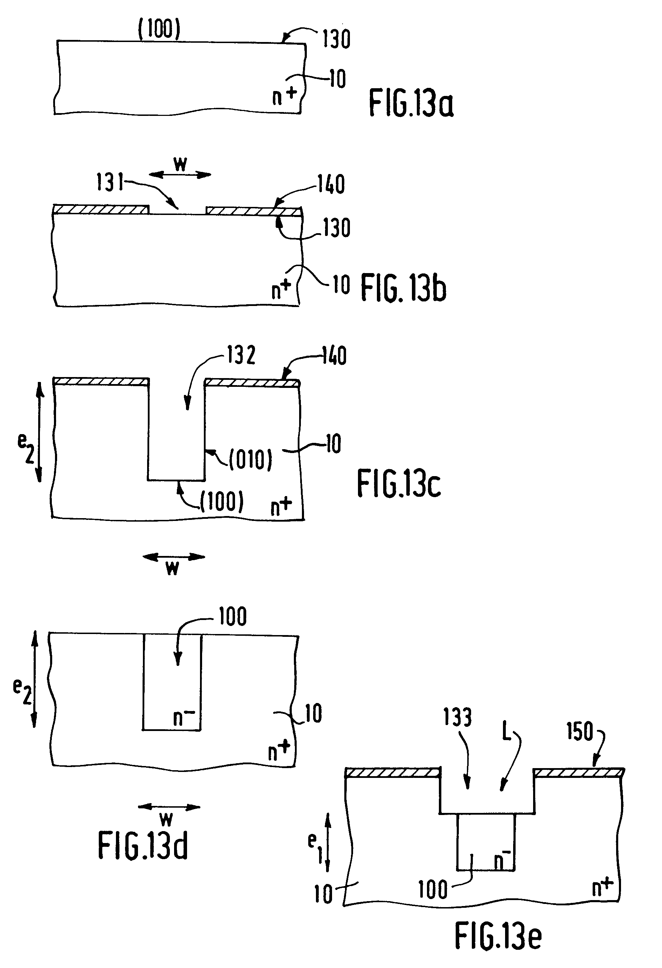

Les différentes figures 13 illustrent un exemple de réalisation qui remplit les conditions définies plus haut.

Le procédé qui permet d'aboutir à cette forme de réalisation comprend les étapes de :
a) formation d'un substrat monocristallin en arséniure de gallium 10, de type $n^+$, dopé par exemple à $6.10^{17}$ porteurs par $cm^3$, et présentant une face plane 130 orientée selon le plan cristallographique (100) (figure 13a) ;

b) délimitation par un masque 140 de sillons 131 de largeur $\underline{W}$ selon les axes cristallographiques [110] et [1$\bar{1}$0] perpendiculaires sur les emplacements prévus pour les guides de lumière formant la matrice de commutation. Ce masque peut être en silice (SiO$_2$) et la largeur W des sillons peut être d'environ 4$\mu$m. La surface (100) du substrat est donc dégagée dans ces sillons (figure 13b) ;

c) gravure du substrat dans les sillons par une méthode dite RIE (Reactive Ion Etching) par exemple. Cette méthode présente sur les autres méthodes l'avantage de former des flancs de gravure bien perpendiculaires au substrat et dénués de sous-gravure du masque. On obtient ainsi dans les sillons 131, des cannelures 132 en creux dans le substrat (figure 13c). La profondeur des cannelures est prévue de l'épaisseur e$_2$ ;

d) introduction de l'échantillon ainsi préparé dans un réacteur d'épitaxie en phase vapeur et léger décapage "in situ" pour mieux faire apparaître les faces cristallines développées dans les cannelures par RIE. On notera en effet que selon les conditions thermodynamiques le réacteur d' épitaxie peut permettre un décapage ou bien une croissance épitaxiale. Les faces longitudinales des cannelures sont des faces (110) et (1$\bar{1}$0) ;

e) croissance en phase vapeur par épitaxie, dans les cannelures, de ruban d'arséniure de gallium de type n$^-$, dopé par exemple à un niveau inférieur à 10$^{15}$ porteurs par cm$^3$, jusqu'au remplissage de la cannelure de manière à obtenir une structure "PLANAR" (figure 13d). Elimination du masque ;

f) délimitation à l'aide d'un second masque 150 d'ouvertures 133 correspondant à la localisation des lames à faces parallèles L. Ces lames à faces parallèles L seront orientées à 45° des guides de lumière, parallèlement aux plans cristallographiques (010) ou (001). Ce masque peut également être réalisé à l'aide de silice (SiO$_2$) ;

g) gravure dans les ouvertures de ce second masque, par la méthode RIE par exemple, de cannelures formant les lames à faces parallèles L ainsi que des structures séparatrices S du type 1 (figure 13e).

A titre d'exemple également sont données ici des fourchettes pour les dimensions des guides de lumière perpendiculairement au substrat.

Avec un indice de réfraction $n_g \simeq 3,5$, correspondant à un substrat dopé à 6.10$^{17}$ porteurs par cm$^3$, une différence entre les indices $n_g - n_S \simeq 10^{-3}$, et pour une longueur d'onde $\lambda = 1,3\mu$m

$3,88\mu\text{m} < e_1 < 11,65\mu\text{m}$

$11,65\mu\text{m} < e_2 < 19,52\mu\text{m}$

L'épaisseur des lames à faces parallèles L (ou distance qui sépare les deux structures séparatrices formant ces lames) peut être de l'ordre de 1$\mu$m.

La distance $\ell$ entre deux lames à faces parallèles (ou longueur des régions intermédiaires) peut être de l'ordre de 200$\mu$m équivalente à la période d'oscillation sur la courbe du barycentre des énergies.

Le décapage propre à constituer les lames à faces parallèles se fait évidemment sur une profondeur égale à la valeur $e_2-e_1$ choisie.

Les électrodes $E_{11}$, $E_{21}$, $E_{31}$ etc... peuvent être par exemple des barrières Schottky réalisées par évaporation de Nickel-Platine-Or (Ni-Pt-Au) sur une longueur légèrement inférieure à celle de la région intermédiaire et sur une largeur dépassant aussi peu que possible la dimension w des guides de manière à minimiser la capacité. Cependant une "oreille" est prévue pour prendre le contact électrique.

L'électrode qui permet de prendre le contact sur le substrat, et qui n'est pas représentée sur les figures, pour des raisons de simplicité, peut être réalisée soit sur la face arrière du substrat, soit sur la même face que le dispositif par un contact de type ohmique formé en un alliage Or-Germanium (Au-Ge) par exemple.

Une différence de potentiel appliquée entre le contact ohmique du substrat (lequel peut recevoir par exemple le potentiel de référence) et une électrode du type barrière Schottky telle que $E_{11}$, $E_{21}$ etc... permet de créer un champ électrique important au niveau de la région intermédiaire des éléments de commutation. Ce champ, par effet électro-optique linéaire permet de modifier l'indice de cette région et d'induire une différence d'indice :

$$\triangle n_g = n_g^3 \times r_{41} \times E$$

où $r_{41}$ est un élément de matrice électro-optique qui intervient lorsque la direction de la lumière est [100] ou [1$\bar{1}$0], et où E est le champ électrique.

D'autres formes de réalisations des dispositifs selon l'invention sont possibles sans sortir du cadre de l'invention tel que défini par les revendications ci-après annexées.

**Revendications**

1. Elément de commutation de signaux optiques entre des guides de lumière monolithiquement intégrés sous forme de rubans (100) en un matériau d'un premier indice de réfraction réalisés sur un substrat (10) en un matériau d'un second indice de réfraction tel que la lumière reste confinée dans les rubans formant les guides, cet élément de commutation comportant, respectivement, une région d'entrée incluant une portion de guide de lumière monomode (G1); une région intermédiaire incluant une portion de guide de lumière bimode (G11) s'étendant dans le prolongement de la portion de guide monomode de la région d'entrée et susceptible de recevoir une onde issue de cette région d'entrée; et une région de sortie incluant une première (G'1) et une seconde (G''1) portions de guides de lumière toutes deux raccordées à la portion de guide bimode (G11) de la région intermédiaire et susceptibles chacune de transporter sélectivement une onde issue de la région intermédiaire, la première (G'1) au moins desdites portions de guide de cette région de sortié étant monomode et s'étendant dans le prolongement de la portion de guide bimode (G11) de la région intermédiaire; ledit élément comportant en outre des moyens de polarisation électriques (E11) appliqués à la région intermédiaire, activables entre un premier (P0) et un second (P1) états de polarisation pour faire varier l'indice de réfraction de la portion de guide bimode et déclencher ainsi la commutation entre l'une (G'1) ou l'autre (G''1) des deux portions de guides de sortie; ledit élément de commutation étant caractérisé en ce que:
   - le substrat (10) ainsi que les rubans (100) formant les guides ou portions de guide sont faits en un matériau semiconducteur,
   - la transition de la portion de guide monomode (G1) de la région d'entrée à la portion de guide bimode (G11) de la région intermédiaire est constituée par une première structure séparatrice (1) formée par une augmentation abrupte des dimensions du guide perpendiculairement au substrat, respectivement e1 et e2, telles que e2 > e1, ladite portion de guide bimode (G11) de ladite région intermédiaire étant, lorsqu'elle reçoit une onde de la région d'entrée, le siège de battements entre le premier mode transporté qui est symétrique et le second mode transporté qui est asymétrique, résultant dans la région intermédiaire en un faisceau guidé dont le barycentre ($\beta$) des énergies est à une distance du substrat qui varie en fonction de la distance vis-à-vis de la première structure séparatrice et/ou de l'indice de réfraction de la portion de guide bimode,
   - la trànsition de la portion de guide bimode (G11) de la région intermédiaire à la première portion de guide monomode (G'1) de la région de sortie est constituée par une seconde structure séparatrice (11) formée par une diminution abrupte des dimensions du guide perpendiculairement au substrat, respectivement e2 et e1, située à une distance l de la première structure séparatrice mesurée le long de l'axe optique, cette diminution abrupte donnant lieu à une partie de paroi réfléchissante (11) et à ladite première portion de guide étrécie (G'1) de dimension e1, et
   - la distance l entre les deux structures séparatrices est prévue pour que le faisceau guidé se propageant dans la région intermédiaire soit, respectivement, dans le premier état de polarisation (P0) desdits moyens de polarisation électriques (E11), transmis par ladite première portion de guide monomode (G'1) de la région de sortie, et dans le second état de polarisation (P1) desdits moyens de polarisation électriques, réfléchi par ladite partie de paroi réfléchissante (11) en direction de ladite seconde portion de guide (G''1) de la région de sortie.

2. Elément selon la revendication 1, caractérisé en ce que la seconde structure séparatrice est orientée selon une direction différente de celle de la normale à l'axe optique (z'z) en sorte que dans le second état de polarisation le faisceau est défléchi par la partie de paroi (11) de cette seconde structure selon un angle double de l'angle d'incidence ($\theta$) du faisceau sur cette paroi.

3. Elément selon la revendication 2, caractérisé en ce que la seconde portion de guide (G''1) de la région de sortie est placée dans l'axe (z'') du faisceau réfléchi.

4. Elément de commutation selon la revendication 3, caractérisé en ce que le substrat est en arséniure de gallium de type $n^+$, et en ce que les guides de lumière sont en arséniure de gallium de type $n^-$.

5. Elément de commutation selon la revendication 4, caractérisé en ce que la première structure séparatrice (1) placée entre la région d'entrée et la région intermédiaire est formée par une facette cristallographique perpendiculaire à l'axe optique (z'z) de la portion de guide d'entrée (G1) et en ce que la seconde structure séparatrice (11) placée entre la région intermédiaire et la région de sortie inclut une facette cristallographique (11) réalisée à 45° de l'axe optique (z'z) de la portion de guide (G11) de la région intermédiaire en sorte que la seconde portion de guide (G'1) de la region de sortie recevant le faisceau refléchi est réalisée perpendiculairement à cet axe.

6. Elément selon la revendication 5 caractérisé en ce que, pour que la portion de guide (G1) de la région d'entrée soit monomode et la portion de guide (G11) de la région intermédiaire bimode, les dimensions $e_1$ et $e_2$ perpendiculairement au substrat sont liées par les relations :

$$\frac{\lambda^2}{32\ n_g(n_g-n_S)} < e_1^2 < \frac{9\ \lambda^2}{32\ n_g(n_g-n_S)} < e_2^2 < \frac{25\ \lambda^2}{32\ n_g(n_g-n_S)}$$

dans laquelle $\lambda$ est la longueur d'onde transportée, $n_g$ est l'indice de réfraction du guide de lumière et $n_S$ est l'indice de réfraction du substrat, et la dimension w des guides parallèlement au substrat est de l'ordre de grandeur de la dimension $e_1$.

7. Matrice de commutation optique entre nxn guides de lumière caractérisée en ce qu'elle est formée de nxn éléments de commutation conformes à l'une des revendications 2 à 6, et en ce que la seconde structure de séparation d'un élément donne forme avec la première structure de séparation de l'élément suivant une lame à face parallèle (L11) de faible indice.

## Claims

1. Element for switching optical signals between optical waveguides monolithically integrated in the form of strips (100) of a material having a first refractive index on a substrate (10) of a material having a second refractive index such that the light remains confined in the strips forming the guides, said switching element comprising, respectively, an entry region including a monomode optical waveguide portion (G1); an intermediate region including a bimode optical waveguide portion (G11) extending and aligned with the monomode guide portion of the entry region and adapted to receive a wave from said entry region; and an exit region including first and second optical waveguide portions (G'1, G"1) both connected to the bimode guide portion (G11) of the intermediate region and adapted to convey selectively a wave from the intermediate region, at least the first guide portion (G'1) of said exit region being monomode and extending and being aligned with the bimode guide portion (G11) of the intermediate region; said element further comprises electric bias means (E11) applied to the intermediate region and adapted to be activated between first and second bias states (P0, P1) to vary the refractive index of the bimode index portion and so to instigate switching between the two exit guide portions (G'1, G"1); said switching element being characterised in that:
    - the substrate (10) and the strips (100) forming the guides or guide portions are made from a semiconductor material,
    - the transition from the monomode guide portion (G1) of the entry region to the bimode guide portion (G11) of the intermediate region is constituted by a first splitter structure (1) formed by an abrupt increase in the dimensions or the guide perpendicular to the substrate, respectively e1 and e2, such that e2 > e1, said bimode guide portion (G11) of said intermediate region, when it receives a wave from the input region, being the site of beating between the first mode phase which is symmetric and the second mode phase which is asymmetric, resulting in the intermediate region in a guided wave whose energy barycentre ($\beta$) is at a distance from the substrate which varies as a function of the distance from the first splitter structure and/or the refractive index of the bimode guide portion,
    - the transition from the bimode guide portion (G11) of the intermediate region to the first monomode guide portion (G'1) of the exit region is constituted by a second splitter structure (11) formed by a sudden decrease in the dimensions of the guide perpendicular to the substrate, respectively e2 and e1, disposed at a distance l from the first splitter structure measured along the optical axis, said sudden reduction producing a reflective wall part (11) and said smaller cross-section first guide portion (G'1) of dimension e1, and
    - the distance l between the two splitter structures is such that the guided beam propagating in the intermediate region is, respectively, in the first bias state (P0) of said electric bias means (E11) transmitted by said first monomode guide portion (G'1) of the exit region and in the second bias state (P1) of said electric bias means reflected by said reflective wall part (11) towards said second guide portion (G"1) of the exit region.

**2.** Element according to claim 1 characterised in that the second splitter structure is oriented in a direction different from that normal to the optical axis (z'z) so that in the second bias state the beam is deflected by the wall part (11) of said second structure at an angle which is twice the angle of incidence ($\theta$) at which the beam impinges on this wall.

**3.** Element according to claim 2 characterised in that the second guide portion (G"1) of the exit region is disposed on the axis (z") of the reflected beam.

**4.** Switching element according to claim 3 characterised in that the substrate is of $n^+$ type gallium arsenide and in that the optical waveguides are of $n^-$ type gallium arsenide.

**5.** Switching element according to claim 4 characterised in that the first splitter structure (1) disposed between the entry region and the intermediate region is formed by a crystallographic facet perpendicular to the optical axis (z'z) of the entry guide portion (G1) and in that the second splitter structure (11) disposed between the intermediate region and the exit region includes a crystallographic facet (11) at 45° to the optical axis (z'z) of the guide portion (G11) of the intermediate region so that the second guide portion (G'1) of the exit region receiving the reflected beam is perpendicular to this axis.

**6.** Element according to claim 5 characterised in that, for the guide portion (G1) of the entry region to be monomode and the guide portion (G11) of the intermediate region to be bimode, the dimensions $e_1$ and $e_2$ perpendicular to the substrate are related as follows:

$$\frac{\lambda^2}{32\ n_g(n_g-n_S)} < e_1^2 < \frac{9\ \lambda^2}{32\ n_g(n_g-n_S)} < e_2^2 < \frac{25\ \lambda^2}{32\ n_g(n_g-n_S)}$$

where $\lambda$ is the wavelength conveyed, $n_g$ is the refractive index of the optical waveguide and $n_S$ is the refractive index of the substrate and the dimension $w$ of the guide parallel to the substrate is in the same order of magnitude as the dimension $e_1$.

**7.** Optical switching matrix between $n \times n$ optical waveguides characterised in that it is formed of $n \times n$ switching elements according to any one of claims 2 through 6 and in that the second splitter structure of an element forms with the first splitter structure of the next element a plane parallel plate (L11) having a low refractive index.

**Patentansprüche**

**1.** Schaltelement für optische Signale zwischen Lichtleitern, die monolithisch in Form von Bändern (100) aus einem Material mit einem ersten Brechungsindex auf einem Substrat (10) integriert sind, das aus einem Material mit einem zweiten Brechungsindex besteht, derart, daß das Licht in den die Lichtleiter bildenden Bändern eingeschlossen bleibt, wobei dieses Schaltelement eine Eingangszone mit einem Abschnitt eines Monomodelichtleiters (G1), eine Zwischenzone mit einem Abschnitt eines bimodalen Lichtleiters (G11), der sich in der Verlängerung des Monomodelichtleiters der Eingangszone erstreckt und eine Lichtwelle von dieser Eingangszone empfangen kann, und eine Ausgangszone mit einem ersten (G'1) und einem zweiten Lichtleiterabschnitt (G"1) enthält, die beide an den bimodalen Lichtleiterabschnitt (G11), der Zwischenzone angeschlossen sind und je selektiv eine von der Zwischenzone kommende Welle transportieren können, wobei zumindest der erste dieser Lichtleiterabschnitte (G'1) der Ausgangszone monomodal ist und sich in der Verlängerung des bimodalen Lichtleiterabschnitts (G11) der Zwischenzone erstreckt, wobei das Schaltelement weiter elektrische Vorspannmittel (E11) enthält, die an die Zwischenzone angelegt sind und zwischen einem ersten und einem zweiten Vorspannungszustand (P0, P1) umgeschaltet werden können, um den Brechungsindex des bimodalen Lichtleiterbereichs zu verändern und so die Umschaltung zwischen den beiden Ausgangslichtleiterabschnitten (G'1 , G"1) auszulösen, dadurch gekennzeichnet, daß
  - das Substrat (10) sowie die Bänder (100), die die Lichtleiter oder Lichtleiterabschnitte bilden, aus einem Halbleitermaterial bestehen,

- der Übergang von dem monomodalen Lichtleiterabschnitt (G1) der Eingangszone zum bimodalen Lichtleiterabschnitt (G11) der Zwischenzone von einer ersten Separatorstruktur (1) gebildet wird, die aus einer plötzlichen Vergrößerung der Abmessungen e1 und e2 senkrecht zum Substrat besteht, derart daß e2 > e1, wobei im bimodalen Lichtleiterabschnitt (G11) der Zwischenzone bei Eintreffen einer Welle von der Eingangszone Schwebungen entstehen zwischen dem ersten transportierten Modus, der symmetrisch ist, und dem zweiten transportierten Modus, der asymmetrisch ist, die in der Zwischenzone zu einem geführten Strahl führen, dessen Schwerpunkt ($\beta$) der Energien sich in einem Abstand vom Substrat befindet, der abhängig vom Abstand gegenüber der ersten Separatorstruktur und/oder vom Brechungsindex des bimodalen Lichtleiterabschnitts variiert,

- der Übergang vom bimodalen Lichtleiterabschnitt (G11) der Zwischenzone zum ersten monomodalen Lichtleiterabschnitt (G'1) der Ausgangszone von einer zweiten Separatorstruktur (11) gebildet wird, die aus einer plötzlichen Verringerung der Abmessungen e2 und e1 des Lichtleiters senkrecht zum Substrat besteht, wobei diese Separatorstruktur in einem Abstand l von der ersten Separatorstruktur angeordnet ist, gemessen entlang der optischen Achse, und wobei diese plötzliche Verringerung der Abmessungen zu einem reflektierenden Wandbereich (11) und zu einem ersten verengten Lichtleiterabschnitt (G' 1) einer Abmessung e1 führt, und

- der Abstand l zwischen den beiden Separatorstrukturen so gewählt ist, daß der geführte Lichtstrahl sich in der Zwischenzone entweder im ersten Vorspannungzustand (P0) der elektrischen Vorspannungsmittel (E11) durch den ersten monomodalen Lichtleiterabschnitt (G'1) der Ausgangszone übertragen wird oder im zweiten Vorspannungszustand (P1) der elektrischen Vorspannmittel an dem reflektierenden Wandbereich (11) in Richtung auf den zweiten Lichtleiterabschnitt (G"1) der Ausgangszone reflektiert wird.

2. Schaltelement nach Anspruch 1, dadurch gekennzeichnet, daß die zweite Separatorstruktur anders orientiert ist als die Normale auf der optischen Achse (z'z) derart, daß im zweiten Polarisationszustand der Strahl von dem Wandbereich (11) dieser zweiten Struktur in einem Winkel abgelenkt wird, der dem doppelten Wert des Einfallswinkels ($\theta$) des Strahls auf diese Wand entspricht.

3. Schaltelement nach Anspruch 2, dadurch gekennzeichnet, daß der zweite Lichtleiterabschnitt (G"1) der Ausgangszone in der Achse (z") des reflektierten Strahls angeordnet ist.

4. Schaltelement nach Anspruch 3, dadurch gekennzeichnet, daß das Substrat aus Galliumarsenid vom Typ $n^+$ ist und daß die Lichtleiter aus Galliumarsenid vom Typ $n^-$ sind.

5. Schaltelement nach Anspruch 4, dadurch gekennzeichnet, daß die erste Separatorstruktur (1), die zwischen der Eingangszone und der Zwischenzone liegt, von einer kristallographischen Facette gebildet wird, die senkrecht zur optischen Achse (z'z) des Eingangslichtleiterabschnitts (G1) verläuft, und daß die zweite Separatorstruktur (11), die zwischen der Zwischenzone und der Ausgangszone liegt, eine kristallographische Facette (11) einschließt, die unter 45° zur optischen Achse (z'z) des Lichtleiterabschnitts (G11) der Zwischenzone ausgebildet ist, sodaß der zweite Lichtleiterabschnitt (G'1) der Ausgangszone, der den reflektierten Strahl empfängt, senkrecht zu dieser Achse verläuft.

6. Schaltelement nach Anspruch 5, dadurch gekennzeichnet, daß die Abmessungen $e_1$ und $e_2$ senkrecht zum Substrat durch folgende Beziehungen miteinander verknüpft sind:
wobei $\lambda$ die transportierte Wellenlänge, $n_g$ der Brechungsindex des Lichtleiters und $n_S$ der Brechungsindex des Substrats ist und wobei die Abmessung w der Lichtleiter parallel zum Substrat in der Größenordnung der Abmessung $e_1$ liegt, sodaß der Lichtleiterabschnitt (G1) der Eingangszone monomodal und der Lichtleiterabschnitt (G11) der Zwischenzone bimodal ist.

7. Optische Schaltmatrix zwischen nxn Lichtleitern, dadurch gekennzeichnet, daß sie aus nxn Schaltelementen gemäß einem der Ansprüche 2 bis 6 besteht und daß die zweite Separatorstruktur eines gegebenen Elements mit der Separatorstruktur des nächstfolgenden Elements eine Lamelle mit parallelen Seiten (L11) und einen niedrigen Brechungsindex bildet.

## FIG.1a

## FIG.1b

## FIG.1c

14

# FIG.2a

# FIG.2b

# FIG.2c

FIG.3a

G_11

10

FIG.3b

U(ou E)

F(ou S')

FIG.3c

U

∝

FIG.3d

E

A'

FIG.4a

FIG.4b

FIG.5a

FIG.5b

FIG.6a

FIG.6b

FIG.7a

FIG.7b

FIG.8a

FIG.8b

FIG.9

FIG.10a

FIG.10c

FIG.10b

FIG.11a

$S_1$  $G_{11}$  $E_{11}$  $L_{11}$  $E_{12}$

$l$

$G_1$

$e_1$  $I_1$

$G_{12}$

$10$

$S_{11}$  $G'_1$  $S'_{11}$

FIG.11c

$w$  $w$

$G'_{11}$  $G_{12}$

$e_2$

$10$

FIG.11b

$G_1$  $S_1$  $G_{11}$  $E_{11}$  $G_{12}$  $10$  $E_{12}$

$S_{11}$  $L_{11}$  $S'_{11}$

$I_1$

$j''$

$G'_{11}$  $E'_{11}$

$J'$

FIG.12

FIG.13a

FIG.13b

FIG.13c

FIG.13d

FIG.13e